# EUROPÄISCHE PATENTANMELDUNG

(11) **EP 2 690 755 A1**
(43) Veröffentlichungstag der Anmeldung: **29.01.2014**
(21) Anmeldenummer: 12178233.8
(22) Anmeldetag: 27.07.2012
(51) Int. Cl.: H02K 5/12, H02K 9/10, H02K 15/00

(54) **Maschine und Verfahren zum Überwachen derselben**

(71) Anmelder: Siemens Aktiengesellschaft, 80333 München (DE)
(72) Erfinder: Kowalski, Waldemar, 45472 Mülheim an der Ruhr (DE); Lehmann, Christoph, 47506 Neukirchen-Vluyn (DE)

(57) **Zusammenfassung**

Die Erfindung betrifft eine elektrische Maschine wie z.B. einen elektrischen Generator mit einem Schleusensystem (3), durch den eine Überwachungseinrichtung (27) derart in die Maschine (1) eingebracht werden kann, dass ein Spülen des Generators nicht erforderlich ist.

## Beschreibung

Die Erfindung betrifft eine Maschine, die mit einem Gas befüllbar ist.

Die Erfindung betrifft des Weiteren ein Verfahren zum Überwachen und/oder Überprüfen einer Maschine.

Maschinen wie z.B. wasserstoffgekühlte Generatoren oder andere mit Gas befüllbare Maschinen sind derart ausgebildet, dass eine Inspektion im Inneren der Maschine nicht möglich ist, solange die Maschine mit dem Wasserstoff bzw. mit Gas befüllt ist. Daher sind Probenentnahmen von Partikeln auf der Oberfläche im Inneren der Maschine derzeit nur schwer oder kaum möglich.

Um dennoch Bildaufnahmen zu erstellen oder Probenentnahmen von Partikeln auf Oberflächen bei wasserstoffgekühlten Generatoren oder mit Gas befüllbaren Maschinen durchzuführen, sind mehrere Schritte notwendig, um das Gas aus der Maschine zu entfernen. Zunächst muss der Wasserstoff aus der Maschine abgelassen und diese anschließend mit einem Inertgas, wie z.B. Kohlendioxid oder Argon gespült werden. Nach der Spülung mit dem Inertgas wird der Generator mit Luft befüllt. Nach der Befüllung mit Luft ist der Generator begehbar und kann überprüft werden. Allerdings dauert dieser Prozess bei großen Generatoren vergleichsweise lange. Erfahrungswerte zeigen, dass solch eine Durchführung dieses Prozesses mehr als acht Stunden betragen kann. Des Weiteren muss noch ein gewisser Zeitraum hinzugerechnet werden, da der Generator nach dem Betrieb abkühlen muss. Erst nach Abkühlen des Generators kann dieser geöffnet werden, um entsprechende Arbeiten wie Inspektionen durchzuführen.

Des Weiteren wird nach Abschluss der Inspektionsarbeiten wieder ein gewisser Zeitraum benötigt, um den Generator mit Wasserstoff zu befüllen. Dies kann ebenfalls bis zu acht oder mehr Stunden dauern. Darüber hinaus wird in der Regel eine Druckprobe durchgeführt, die ebenfalls mit einem Tag eingerechnet werden muss. Somit kann insgesamt von einer Woche Stillstand ausgegangen werden, wenn nach der Druckprobe durch Nacharbeiten infolge von Undichtigkeiten noch eine Verzögerung entsteht.

Wünschenswert wäre es, diese Zeit zu verkürzen.

An dieser Stelle setzt die Erfindung an, deren Aufgabe es ist, eine Maschine und ein Verfahren anzugeben, mit dem eine Inspektion schnell durchgeführt werden kann.

Gelöst wird diese Aufgabe durch eine Maschine, die mit einem Gas befüllbar ist, mit einem Gehäuse, wobei an das Gehäuse ein erster Raum angeordnet ist, wobei zwischen dem Gehäuse und dem ersten Raum eine erste Klappe angeordnet ist, die eine strömungstechnische Verbindung zwischen dem Gehäuse und dem ersten Raum herstellt, und ein zweiter Raum, der an dem ersten Raum angeordnet ist, wobei zwischen dem ersten und dem zweiten Raum eine zweite Klappe angeordnet ist, die eine strömungstechnische Verbindung zwischen dem ersten Raum und dem zweiten Raum herstellt, wobei eine Überwachungseinrichtung zur Überprüfung im Gehäuse vorgesehen ist.

Die auf das Verfahren hin gerichtete Aufgabe wird gelöst durch ein Verfahren zum Überwachen und/oder Überprüfen einer Maschine, die mit Gas befüllbar ist, wobei eine fernsteuerbare Überwachungseinrichtung über ein Schleusensystem in das Innere der Maschine gefahren wird.

Die Erfindung geht von dem Aspekt aus, dass ein Schleusensystem an die Maschine angeordnet wird, um ein komplettes Spülen des Generators bzw. der Maschine zu vermeiden. Das Schleusensystem kann an einem Mannlochdeckel eines Generators, insbesondere eines Fremdgenerators angebracht werden. Erfindungsgemäß wird vorgeschlagen, mit dem Schleusensystem eine Überwachungseinrichtung in den mit Wasserstoff gefüllten Generator einzubringen, um eine Überwachung bzw. Probenentnahme durchzuführen.

Hierzu umfasst das Schleusensystem einen ersten Raum, der über eine Klappe strömungstechnisch mit dem Inneren des Generators verbindbar ist. Des Weiteren umfasst das Schleusensystem einen zweiten Raum, der über eine zweite Klappe mit dem ersten Raum verbindbar ist. Schließlich umfasst der zweite Raum eine äußere Klappe, über die die Überwachungseinrichtung einbringbar ist. Über Zu- und Ableitungen können der erste Raum und der zweite Raum mit Luft, Inertgas oder mit Wasserstoff befüllt werden. Ein wesentlicher Gedanke der Erfindung ist, dass die Überwachungseinrichtung im ersten Raum bei geschlossener erster Klappe und zweiter Klappe angeordnet wird und nachdem der erste Raum mit dem Wasserstoff befüllt wird, der sich im Generator befindet und auch denselben Druck aufweist, die erste Klappe sich öffnet und die Überwachungseinrichtung in das Innere des Generators bewegt werden kann.

Vorteilhafte Weiterbildungen sind in den Unteransprüchen angegeben.

In einer ersten vorteilhaften Weiterbildung umfasst die Überwachungseinrichtung einen von außen bedienbaren Roboter. Dieser von außen bedienbare Roboter kann über eine Fernsteuerung im ersten Raum, im zweiten Raum und im Generator frei bewegt werden. Dies kann über eine Funkfernsteuerung oder ähnliche Übertragungseinrichtungen erfolgen.

In weiteren vorteilhaften Weiterbildungen sind der erste Raum und der zweite Raum mit einer Abgasleitung ausgebildet, um die im ersten Raum bzw. im zweiten Raum befindlichen Gase abzusaugen.

Erfindungsgemäß wird vorgeschlagen, den ersten Raum und den zweiten Raum mit einer Zuleitung auszubilden, damit der erste und der zweite Raum mit einem Gas befüllt werden kann.

Die Erfindung wird anhand eines Ausführungsbeispieles näher erläutert.

Es zeigt:

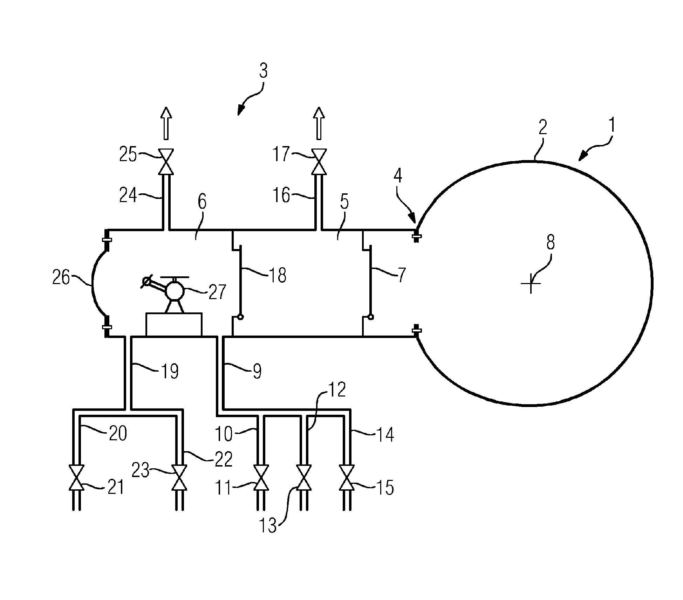

- Figur 1: eine schematische Übersicht der Maschine.

Die Maschine ist bspw. als Generator 1 ausgebildet und umfasst ein Gehäuse 2, wobei innerhalb des Gehäuses 2 Wasserstoff enthalten ist. An das Gehäuse 2 ist ein Schleusensystem 3 über eine Verbindung 4 angeordnet. Das Schleusensystem 3 umfasst einen ersten Raum 5 und einen zweiten Raum 6. Der erste Raum 5 ist über eine Klappe 7 strömungstechnisch mit dem Inneren 8 des Generators 1 verbindbar. Durch Öffnen der ersten Klappe 7 wird eine strömungstechnische Verbindung zwischen dem ersten Raum 5 und dem Inneren des Generators 8 ermöglicht. Der erste Raum 5 ist zudem mit einer ersten Zuleitung 9 ausgebildet. Diese erste Zuleitung 9 umfasst drei Unterzuleitungen, die mit Ventilen versehen sind. So umfasst die erste Zuleitung eine erste Unterzuleitung 10 mit einem ersten Unterventil 11. Über das erste Unterventil 11 und der ersten Unterzuleitung 10 kann Wasserstoff in den ersten Raum 5 gelangen. Die erste Zuleitung 9 ist ebenso mit einer zweiten Unterleitung 12 und einem zweiten Unterventil 13 strömungstechnisch verbunden. Durch die zweite Unterleitung 12 kann Luft in den ersten Raum 5 strömen. Des Weiteren ist die erste Zuleitung 9 mit einer dritten Unterzuleitung 14 und einem dritten Unterventil 15 verbunden. Durch die dritte Unterzuleitung 14 kann Kohlendioxid (CO₂) in den ersten Raum gelangen.

Der erste Raum 5 ist ebenso mit einer Abgasleitung 16, in dem ein Abgasventil 17 angeordnet ist, verbunden. Über die erste Abgasleitung kann das im ersten Raum befindliche Gas entströmen.

Über eine zweite Klappe 18 ist eine strömungstechnische Verbindung zwischen dem zweiten Raum 6 und dem ersten Raum 5 möglich. Der zweite Raum 6 umfasst eine zweite Zuleitung 19. Die zweite Zuleitung 19 umfasst eine vierte Unterzuleitung 20 mit einem vierten Unterventil 21. Des Weiteren umfasst die zweite Zuleitung 19 eine fünfte Zuleitung 22 mit einem fünften Unterventil 23. Über die vierte Unterzuleitung kann Luft in den zweiten Raum 6 geführt werden. Über die fünfte Unterzuleitung 22 kann Kohlendioxid (CO₂) in den zweiten Raum 6 gelangen.

Der zweite Raum 6 umfasst ferner eine zweite Abgasleitung 24 mit einem zweiten Abgasventil 25. Über die zweite Abgasleitung 24 kann das im zweiten Raum 6 befindliche Gas ausströmen.

Über eine dritte Klappe 26 kann das Schleusensystem 3 schließlich verschlossen werden.

Der erste Raum 5 und der zweite Raum 6 sind hintereinander angeordnet sowie druckfest und gasdicht ausgebildet. In den zweiten Raum 6 kann nun eine Überwachungseinrichtung in Form eines funkferngesteuerten fliegenden Roboters 27 eingebracht werden. Dazu muss vorher die dritte Klappe 26 geöffnet und die zweite Klappe 18 und die erste Klappe 7 verschlossen werden. Der fliegende Roboter 27 kann als ein kleiner Hubschrauber ausgeführt sein und mit einer Videokamera, einem Scheinwerfer und Greifwerkzeugen ausgestattet sein. Zur Steuerung des Roboters sind Sende- und Empfangsantennen am Roboter, im Generator 1 sowie im ersten Raum 5 und im zweiten Raum 6 angebracht.

Das Schleusensystem und die Überwachungseinrichtung sind nun derart ausgebildet, dass das Überwachungssystem in den mit Wasserstoff gefüllten Generator fliegen kann.

Dazu muss, nachdem der Roboter in den zweiten Raum 6 eingebracht wurde, die dritte Klappe 26 geschlossen werden. Anschließend wird der zweite Raum 6 mit Inertgas wie z.B. CO₂ gespült und anschließend mit Luft gefüllt. Dazu werden das vierte Unterventil 21 und das fünfte Unterventil 23 geöffnet und geschlossen. Danach kann der Roboter durch Öffnen der zweiten Klappe 18 in den ersten Raum 5 geflogen werden. Nach Schließen der zweiten Klappe 18 wird nun der erste Raum erneut mit Inertgas wie z.B. CO₂ gespült und anschließend mit Wasserstoff gefüllt. Dabei wird der Wasserstoff im ersten Raum 5 auf den gleichen Druck gebracht, der auch im Inneren 8 des Generators 1 herrscht. Anschließend kann die erste Klappe 7 geöffnet werden und der Roboter kann in das Innere des Generators 8 bewegt werden.

Dabei ist zu beachten, dass die Auftriebskraft des Hubschraubers an die Gasdichte im Inneren des Generators 8 angepasst werden muss. Somit können nunmehr im Inneren des Generators 8 beliebige zugängliche Stellen angeflogen werden, um bspw. Aufnahmen zu machen. Mit den Greifwerkzeugen können auch Proben von vorgefundenen Verschmutzungen wie z.B. Reibstaub oder anderen Ablagerungen im Wickelkopf aufgenommen werden.

Die Rückkehr des Roboters kann durch das Schleusensystem 3 in umgekehrter Reihenfolge erfolgen. Im zweiten Raum 6 können nun die mitgebrachten Proben entnommen und analysiert werden.

## Patentansprüche

1. Maschine (1), die mit einem Gas befüllbar ist, mit einem Gehäuse (2),
wobei an das Gehäuse (2) ein erster Raum (5) angeordnet ist,
wobei zwischen dem Gehäuse (2) und dem ersten Raum (5) eine erste Klappe (7) angeordnet ist, die eine strömungstechnische Verbindung zwischen dem Gehäuse (2) und dem ersten Raum (5) herstellt,
und ein zweiter Raum (6), der an dem ersten Raum (5) angeordnet ist,
wobei zwischen dem ersten Raum (5) und dem zweiten Raum (6) eine zweite Klappe (18) angeordnet ist, die eine strömungstechnische Verbindung zwischen dem ersten Raum (5) und dem zweiten Raum (6) herstellt,
wobei eine Überwachungseinrichtung (27) zur Überprüfung im Gehäuse (2) vorgesehen ist.

2. Maschine (1) nach Anspruch 1,
wobei der erste Raum (5) und der zweite Raum (6) als Schleusensystem (3) ausgebildet sind.

3. Maschine (1) nach Anspruch 1 oder 2,
wobei die Überwachungseinrichtung einen von außen bedienbaren Roboter (27) umfasst.

4. Maschine (1) nach Anspruch 1, 2 oder 3,
wobei der erste Raum (5) mit einer Abgasleitung (16) ausgebildet ist.

5. Maschine (1) nach einem der vorhergehenden Ansprüche, wobei der zweite Raum (6) mit einer Abgasleitung (16) ausgebildet ist.

6. Maschine (1) nach einem der vorhergehenden Ansprüche, wobei der erste (5) und der zweite Raum (6) eine Zuleitung (9) umfasst.

7. Maschine (1) nach einem der vorhergehenden Ansprüche, wobei der zweite Raum (6) eine von außen verschließbare Klappe (26) aufweist.

8. Verfahren zum Überwachen und/oder Überprüfen einer Maschine (1), die mit Gas befüllbar ist,
wobei eine fernsteuerbare Überwachungseinrichtung (27) über ein Schleusensystem (3) in das Innere der Maschine gefahren wird.

9. Verfahren nach Anspruch 8,
wobei das Schleusensystem (3) einen ersten Raum (5) und einen zweiten Raum (6) umfasst,
wobei in einem ersten Schritt der erste Raum (5) mit einem Inertgas gespült und anschließend mit Luft befüllt wird und in einem zweiten Schritt der zweite Raum (2) mit einem Inertgas gespült und anschließend mit Luft befüllt wird und in einem weiteren Schritt die Überwachungseinrichtung (27) in den ersten Raum (5) gebracht wird und anschließend der erste Raum (5) mit dem gleichen Gas befüllt wird wie das im Inneren der Maschine befindliche Gas.

10. Verfahren nach Anspruch 9,
wobei der erste Raum (5) auf den im Wesentlichen gleichen Druck wie im Inneren der Maschine (1) gebracht wird.
